# EUROPÄISCHE PATENTSCHRIFT

(11) **EP 4 321 025 B1**
(45) Veröffentlichungstag und Bekanntmachung des Hinweises auf die Patenterteilung: **12.03.2025**
(21) Anmeldenummer: 23190175.2
(22) Anmeldetag: 08.08.2023
(51) Int. Cl.: A21C 3/06, A21C 3/10, A21C 7/01

(54) **TEIGVERARBEITUNGSANLAGE UND VERFAHREN**
DOUGH PROCESSING SYSTEM AND METHOD
INSTALLATION ET PROCÉDÉ DE TRAITEMENT DE PÂTE

(30) Priorität: 10.08.2022 DE 102022120192
(43) Veröffentlichungstag der Anmeldung: 14.02.2024
(73) Patentinhaber: Fritsch Bakery Technologies GmbH & Co. KG, 97348 Markt Einersheim (DE)
(72) Erfinder: DORNER, Fred, 97318 Kitzingen (DE)
(74) Vertreter: Grünecker Patent- und Rechtsanwälte PartG mbB

(56) Entgegenhaltungen:
- EP-A1- 1 020 116
- GB-A- 2 468 114
- US-A1- 2004 076 725
- US-A1- 2018 132 490

## Beschreibung

Die Erfindung bezieht sich auf Teigverarbeitungsanlagen.

Aus dem Stand der Technik, bspw. aus EP 0 494 600 A1, sind Vorrichtungen zum Rundwirken von Teig, auch Bänderrundwirker genannt, bekannt. Sie werden häufig zum Formen von Brotlaiben eingesetzt. Dazu wird eine Masse von Teig zwischen den Förderbändern in die Vorrichtung eingelegt. Durch die unterschiedlichen Geschwindigkeiten der Förderbänder wird die Teigmasse einerseits gefördert und andererseits rundgewirkt. Probleme treten häufig nach dem Einlegen auf, da der zum Fördern und Rundwirken erforderliche Eingriff zwischen der Teigmasse und den Förderbändern nicht immer wie gewünscht zustande kommt. Dies ist besonders bei hoch automatisierten Teigverarbeitungsanlagen problematisch, da es häufig zu Störungen kommen kann, die zum einen Standzeiten verursachen, zum anderen Eingriffe von Personal erfordern, was den Automatisierungsgedanken konterkariert.

In der unveröffentlichten Anmeldung DE 10 2021 134 478.6 der Anmelderin wird eine Teigverarbeitungsvorrichtung beschrieben, die eine Teigmasse durch zwei Walzenpaare hindurch fördert, bevor sie an einen Bänderrundwirker übergeben wird. Dadurch kann die Teigmasse in eine kompaktere Form gebracht und eine Erhöhung der Zuverlässigkeit des Anlaufens in dem nachfolgenden Bänderrundwirker erreicht werden

Aus US 2018 0 132 490 A1 ist eine Teiglinie zum Verarbeiten von klebrigen Teigtypen bekannt. Die Teiglinie umfasst ein Schneidmittel zum Abschneiden von Teigstücken. Die Teigstücke sollen aufgerollt gekippt und dann in einer Form komprimiert werden.

Es ist eine Aufgabe der Erfindung, eine weiter verbesserte Teigverarbeitungsanlage anzugeben, die ein zuverlässigeres Rundwirken von Teigmassen in Bänderrundwirkern ermöglicht. Diese Aufgabe wird gelöst durch eine Teigverarbeitungsvorrichtung mit den Merkmalen des Anspruchs 1 bzw. durch ein Verfahren mit den Merkmalen des Anspruchs 6.

Vorteilhafte Weiterbildungen sind in den abhängigen Ansprüchen angegeben.

Die Teigverarbeitungsanlage umfasst einen Teigbanderzeuger, der dazu konfiguriert ist, aus einer ungeformten Teigmenge ein Teigband zu erzeugen, das sich in Richtung eines Produktionspfades erstreckt, und eine Schneidvorrichtung, die dazu konfiguriert ist, eine Teigmasse durch Abtrennen von dem Teigband zu erzeugen. Die Teigverarbeitungsanlage umfasst des Weiteren eine Teigverarbeitungsvorrichtung mit einer Wickelvorrichtung und einem Bänderrundwirker, wobei die Wickelvorrichtung entlang des Produktionspfads zwischen der Schneidvorrichtung und dem Bänderrundwirker angeordnet und zum Wickeln der Teigmasse um eine Achse konfiguriert ist, die vorzugsweise quer zu dem Produktionspfad, insbesondere quer zum Verlauf des Produktionspfads durch die Wickelvorrichtung, orientiert ist. Durch die Anordnung einer Wickelvorrichtung zwischen der Schneidvorrichtung und dem Bänderrundwirker können Teigmassen beliebiger Form in eine kompaktere Form gebracht werden. Dadurch kann eine Erhöhung der Zuverlässigkeit des Anlaufens in einem nachfolgenden Bänderrundwirker erreicht werden.

Als quer zueinander orientierte Achsen, Pfade oder Richtungen können z. B. Achsen, Pfade oder Richtungen angesehen werden, die einen Winkel einschließen, der z. B. größer als 0° und kleiner als 180° ist und vorzugsweise 90° beträgt. Als Produktionspfad kann ein Pfad angesehen werden, entlang dessen der Teig bzw. das Teigband bzw. die Teigmasse die Teigverarbeitungsanlage durchlaufen. Der Produktionspfad bzw. der Verlauf des Produktionspfads kann an unterschiedlichen Stellen in der Teigverarbeitungsanlage, bspw. in unterschiedlichen Stationen und/oder Vorrichtungen der Teigverarbeitungsanlage, unterschiedlich orientiert sein. Z. B. kann der Verlauf des Pfads durch die Schneidvorrichtung quer zum Verlauf des Produktionspfads durch die Wickelvorrichtung orientiert sein.

Der Verlauf des Produktionspfads durch die Wickelvorrichtung ist quer zum Verlauf des Produktionspfads durch die Schneidvorrichtung orientiert. Dadurch kann die Ausrichtung der Teigmasse relativ zu dem Produktionspfad, insbesondere zwischen der Schneidvorrichtung und der Wickelvorrichtung, veränderbar sein, bspw. durch Übergabe zwischen zwei Förderern, deren Förderrichtungen quer zueinander orientiert sind. Durch eine veränderte Ausrichtung der Teigmasse kann die Orientierung der Wickelachse derart beeinflussbar sein, dass die Teigmasse durch das Wickeln in der Wickelvorrichtung in eine möglichst kompakte Form gebracht werden kann.

Die Achse kann bspw. quer zu einer Schnittrichtung der Schneidvorrichtung orientiert sein. Dies kann insbesondere dann vorteilhaft sein, wenn die Schneidvorrichtung dazu konfiguriert ist, Teigmassen vom Teigband abzutrennen, die in Richtung des Produktionspfades, insbesondere in Richtung des Verlaufs des Produktionspfads in der Schneidvorrichtung, kürzer sind als das Teigband breit ist. In solchen Fällen kann eine quer zu der Schnittrichtung orientierte Achse eine kompakter gewickelte Teigmasse ermöglichen.

Die Schneidvorrichtung kann dazu konfiguriert sein, die Teigmasse quer zu dem Produktionspfad, insbesondere quer zu dem Verlauf des Produktionspfads durch die Schneidvorrichtung, von dem Teigband abzutrennen. So können mit einem einzigen Schnitt pro Teigmasse einzelne Teigmassen erzeugbar sein.

Die Wickelvorrichtung kann z. B. eine Wickelmatte umfassen. Durch eine Wickelmatte kann die Teigmasse auf besonders einfache Weise um eine quer zu dem Produktionspfad, insbesondere quer zum Verlauf des Produktionspfads durch die Wickelvorrichtung, orientierte Achse gewickelt werden. Eine Wickelmatte kann Polymer- und/oder Metallmaterialien umfassen.

Die Schneidvorrichtung kann einen Schneidförderer aufweisen und die Wickelvorrichtung kann einen Wickelförderer aufweisen. Der Schneidförderer und der Wickelförderer können quer zueinander orientierte Förderrichtungen aufweisen. Der Schneidförderer kann dazu konfiguriert sein, die Teigmasse auf den Wickelförderer abzuwerfen. Dadurch kann die Ausrichtung der Teigmasse relativ zu dem Produktionspfad gezielt veränderbar sein.

Die Erfindung bezieht sich auch auf ein Verfahren zum Rundwirken einer Teigmasse. Das Verfahren umfasst Erzeugen eines Teigbands, das sich in Richtung eines Produktionspfads erstreckt, aus einer ungeformten Teigmenge durch einen Teigbanderzeuger, Abtrennen einer Teigmasse von dem Teigband durch eine Schneidvorrichtung und Wickeln der Teigmasse um eine Achse durch eine Wickelvorrichtung, wobei die Achse vorzugsweise quer zu dem Produktionspfad, insbesondere quer zum Verlauf des Produktionspfads durch die Wickelvorrichtung, orientiert ist,. Das Verfahren umfasst des Weiteren Übergeben der Teigmasse an einen Bänderrundwirker nach dem Wickeln durch die Wickelvorrichtung und Rundwirken der Teigmasse durch den Bänderrundwirker. Durch das Wickeln der Teigmasse vor dem Übergeben an den Bänderrundwirker können Teigmassen beliebiger Form in eine kompaktere Form gebracht werden. Dadurch kann eine Erhöhung der Zuverlässigkeit des Anlaufens in einem nachfolgenden Bänderrundwirker erreicht werden.

Der Verlauf des Produktionspfads durch die Wickelvorrichtung ist quer zum Verlauf des Produktionspfads durch die Schneidvorrichtung orientiert. Dadurch kann die Ausrichtung der Teigmasse relativ zu dem Produktionspfad, insbesondere zwischen der Schneidvorrichtung und der Wickelvorrichtung, veränderbar sein, bspw. durch Übergabe zwischen zwei Förderern, deren Förderrichtungen quer zueinander orientiert sind. Durch eine veränderte Ausrichtung der Teigmasse kann die Orientierung der Wickelachse derart beeinflussbar sein, dass die Teigmasse durch das Wickeln in der Wickelvorrichtung in eine möglichst kompakte Form gebracht werden kann.

Die Achse kann z. B. quer zu einer Schnittrichtung der Schneidvorrichtung orientiert sein. Dies kann insbesondere dann vorteilhaft sein, wenn die Schneidvorrichtung dazu konfiguriert ist, Teigmassen vom Teigband abzutrennen, die in Richtung des Produktionspfades, insbesondere in Richtung des Verlaufs des Produktionspfads in der Schneidvorrichtung, kürzer sind als das Teigband breit ist. In solchen Fällen kann eine quer zu der Schnittrichtung orientierte Achse eine kompakter gewickelte Teigmasse ermöglichen.

Das Verfahren kann des Weiteren Abtrennen der Teigmasse von dem Teigband quer zu dem Produktionspfad, insbesondere quer zu dem Verlauf des Produktionspfads durch die Schneidvorrichtung, durch die Schneidvorrichtung umfassen. So können mit einem einzigen Schnitt pro Teigmasse einzelne Teigmassen erzeugbar sein.

Es kann vorteilhaft sein, wenn die Wickelvorrichtung eine Wickelmatte umfasst. Durch eine Wickelmatte kann die Teigmasse auf besonders einfache Weise um eine quer zu dem Produktionspfad, insbesondere quer zu dem Verlauf des Produktionspfads durch die Wickelvorrichtung, orientierte Achse gewickelt werden. Eine Wickelmatte kann Polymer- und/oder Metallmaterialien umfassen.

Die Teigmasse kann in der Schneidvorrichtung quer zu dem Produktionspfad, insbesondere quer zu dem Verlauf des Produktionspfads durch die Schneidvorrichtung, eine größere Ausdehnung aufweisen als parallel zu dem Produktionspfad, insbesondere parallel zu dem Verlauf des Produktionspfads durch die Schneidvorrichtung. Alternativ oder zusätzlich kann die Teigmasse in der Wickelvorrichtung quer zu dem Produktionspfad, insbesondere quer zu dem Verlauf des Produktionspfads durch die Wickelvorrichtung, eine kleinere Ausdehnung aufweisen als parallel zu dem Produktionspfad, insbesondere parallel zu dem Verlauf des Produktionspfads durch die Wickelvorrichtung. Dadurch kann die kompaktierende Wirkung des Wickelns um die quer zu dem Produktionspfad orientierte Achse optimiert werden.

Das Verfahren kann des Weiteren Abwerfen der Teigmasse auf einen Wickelförderer der Wickelvorrichtung durch einen Schneidförderer der Schneidvorrichtung umfassen, Der Schneidförderer und der Wickelförderer können quer zueinander orientierte Förderrichtungen aufweisen. Dadurch kann die Ausrichtung der Teigmasse relativ zu dem Produktionspfad gezielt veränderbar sein.

Die Erfindung bezieht sich auf eine Teigverarbeitungsanlage sowie ein Verfahren der vorstehend beschriebenen Art. Im Folgenden wird eine mögliche Ausführungsform beispielhaft anhand von Zeichnungen näher erläutert.
Figur 1 zeigt eine schematische Perspektivansicht einer Teigverarbeitungsanlage.
Figur 2 zeigt eine schematische Draufsicht von oben auf Teile einer Schneidvorrichtung, eine Wickelvorrichtung und einen Bänderrundwirker.

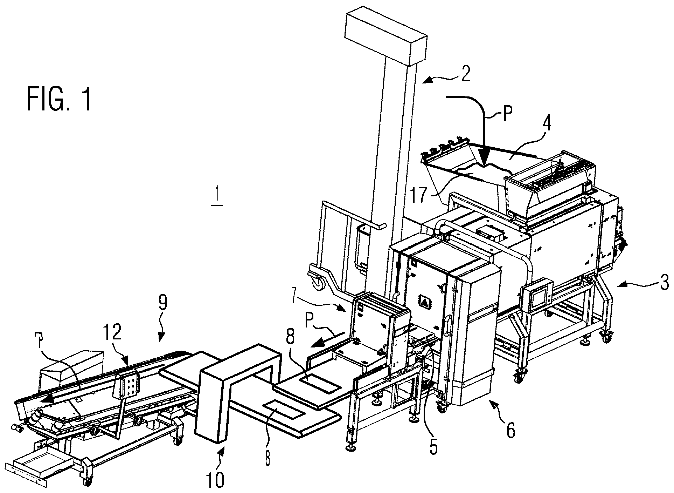

In Figur 1 ist eine Teigverarbeitungsanlage 1 in einer schematischen, perspektivischen Ansicht dargestellt. Die Teigverarbeitungsanlage 1 kann beispielsweise zum Herstellen von Brot konfiguriert sein. Sie umfasst mehrere Komponenten und/oder Vorrichtungen die entlang eines Produktionspfades P nacheinander angeordnet sind. Sie kann einen Teiglift 2 umfassen. Mit dem Teiglift 2 können angelieferte Teigbehälter angehoben werden, um den angelieferten Teig in den Teigbanderzeuger 3 zu füllen. Dazu kann der Teigbanderzeuger 3 einen Trichter 4 umfassen. Der Teigbanderzeuger 3 ist dazu konfiguriert, aus einer noch ungeformten Teigmenge 17 ein Teigband 5 zu erzeugen, das sich vorzugsweise in Richtung des Produktionspfads P erstreckt.

Die Teigverarbeitungsanlage 1 kann des Weiteren eine Walzvorrichtung 6 umfassen. Das durch den Teigbanderzeuger 3 erzeugte Teigband 5 kann nach dem Teigbanderzeuger 3 die Walzvorrichtung 6 durchlaufen. Die Walzvorrichtung 6 kann dazu konfiguriert sein, das Teigband 5 auf eine gewünschte Dicke zu walzen. Die Teigverarbeitungsanlage 1 umfasst des Weiteren eine Schneidvorrichtung 7. Die Schneidvorrichtung 7 ist dazu konfiguriert, eine Teigmasse 8, vorzugsweise quer zu dem Produktionspfad P, insbesondere quer zum Verlauf des Produktionspfads P durch die Schneidvorrichtung 7 von dem Teigband 5 abzutrennen.

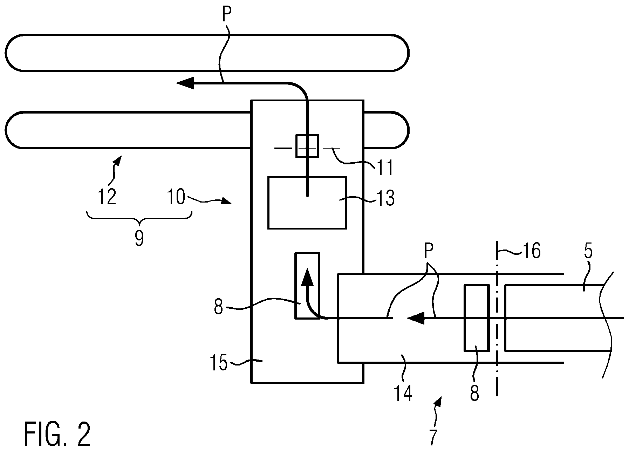

Des Weiteren umfasst die Teigverarbeitungsanlage 1 eine Teigverarbeitungsvorrichtung 9. Die Teigverarbeitungsvorrichtung 9 umfasst eine Wickelvorrichtung 10. Die Wickelvorrichtung 10 ist dazu konfiguriert, die Teigmasse 8 um eine Achse 11 (siehe Figur 2) zu wickeln. Die Teigverarbeitungsvorrichtung 9 umfasst des Weiteren einen Bänderrundwirker 12. Der Bänderrundwirker 12 kann dazu konfiguriert sein, die Teigmasse 8 zu einem runden Laib zu formen. Der Teig bzw. das Teigband 5 bzw. die Teigmasse 9 durchlaufen die Teigverarbeitungsanlage 1 entlang des Produktionspfads P.

In Figur 2 ist eine schematische Draufsicht von oben auf Teile einer Schneidvorrichtung 7, die Wickelvorrichtung 10 und den Bänderrundwirker 12 dargestellt. Nun ist erkennbar, dass die Wickelvorrichtung 10 eine Wickelmatte 13 umfassen kann. Auch der Verlauf des Produktionspfads P ist detaillierter erkennbar. Der Verlauf des Produktionspfads P durch die Wickelvorrichtung 10 ist quer zu dem Verlauf des Produktionspfads P durch die Schneidvorrichtung 7 orientiert.

Die Schneidvorrichtung 7 kann einen Schneidförderer 14 umfassen. Der Schneidförderer 14 kann dazu konfiguriert sein, die Teigmasse 8 entlang des Produktionspfads P durch die Schneidvorrichtung 7 zu fördern. Die Wickelvorrichtung 10 kann einen Wickelförderer 15 umfassen. Der Wickelförderer 15 kann dazu konfiguriert sein, die Teigmasse 8 entlang des Produktionspfads P durch die Wickelvorrichtung 10 zu fördern. Der Schneidförderer 14 und der Wickelförderer 15 können, wie im Ausführungsbeispiel gezeigt, derart angeordnet sein, dass sie unterschiedliche Förderrichtungen aufweisen. Dadurch kann erreicht werden, dass der Verlauf des Produktionspfads P durch die Wickelvorrichtung 10 quer zu dem Verlauf des Produktionspfads P durch die Schneidvorrichtung 7 orientiert ist.

In Figur 2 ist außerdem beispielhaft eine Schnittrichtung 16 gezeigt, in welcher die Teigmasse 8 von dem Teigband 5 abgetrennt werden kann. Die Schnittrichtung 16 kann quer zu dem Produktionspfad P, insbesondere quer zu dem Verlauf des Produktionspfads P durch die Schneidvorrichtung 7, orientiert sein. Die Achse 11 kann quer zu der Schnittrichtung 16 orientiert sein.

Ein beispielhafter Produktionsablauf kann folgendermaßen vorgesehen sein. Durch den Teiglift 2 kann die ungeformte Teigmenge 17 in den Trichter 4 gefüllt werden. Durch den Teigbanderzeuger 3 kann aus der ungeformten Teigmenge 17 ein Teigband 5 geformt werden. Das Teigband 5 kann anschließend durch die Walzvorrichtung 6 auf eine gewünschte Dicke und/oder breite gewalzt werden. Durch die Schneidvorrichtung 7 kann die Teigmasse 8 von dem Teigband 5 abgetrennt werden. Wie im Ausführungsbeispiel gezeigt, kann eine Ausdehnung der Teigmasse 8 in der Schneidvorrichtung 7 quer zu dem Produktionspfad P, insbesondere quer zu dem Verlauf des Produktionspfads P durch die Schneidvorrichtung 7, größer sein als parallel zu dem Produktionspfad P, insbesondere parallel zu dem Verlauf des Produktionspfads P durch die Schneidvorrichtung 7.

Anschließend kann die Teigmasse 5 von der Schneidvorrichtung 7, insbesondere von dem Schneidförderer 14, an die Wickelvorrichtung 10, insbesondere an den Wickelförderer 15 übergeben werden. Dabei kann die Ausrichtung der Teigmasse 8 relativ zu dem Produktionspfad P verändert werden. In der Wickelvorrichtung 10 kann auf diese Weise die Ausdehnung der Teigmasse 8 quer zu dem Produktionspfad P, insbesondere quer zu dem Verlauf des Produktionspfads P durch die Wickelvorrichtung 10, kleiner sein als parallel zu dem Produktionspfad P, insbesondere parallel zu dem Verlauf des Produktionspfads P durch die Wickelvorrichtung 10.

Anschließend kann die Teigmasse durch die Wickelvorrichtung 10, insbesondere durch die Wickelmatte 13, um die Achse 11 gewickelt werden. Dadurch, dass gemäß dem vorliegenden Ausführungsbeispiel die Ausdehnung der Teigmasse 8 in der Wickelvorrichtung 10 quer zu dem Produktionspfad P, insbesondere quer zu dem Verlauf des Produktionspfads P durch die Wickelvorrichtung 10, kleiner ist als parallel zu dem Produktionspfad P, insbesondere parallel zu dem Verlauf des Produktionspfads P durch die Wickelvorrichtung 10, und dass die Achse 11 gemäß dem Ausführungsbeispiel quer zu dem Produktionspfad P, insbesondere quer zu dem Verlauf des Produktionspfads P durch die Wickelvorrichtung 10, orientiert ist, kann die Teigmasse 8 in eine besonders kompakte Form gebracht werden.

Anschließend kann die Teigmasse 8 an den Bänderrundwirker 12 übergeben und durch diesen zu einem runden Laib geformt werden.

## Patentansprüche

1. Teigverarbeitungsanlage (1), umfassend:
einen Teigbanderzeuger (3), der dazu konfiguriert ist, aus einer ungeformten Teigmenge (17) ein Teigband (5) zu erzeugen, das sich in Richtung eines Produktionspfades (P) erstreckt;
eine Schneidvorrichtung (7), die dazu konfiguriert ist, eine Teigmasse (8) durch Abtrennen von dem Teigband (5) zu erzeugen;
eine Teigverarbeitungsvorrichtung (9) mit einer Wickelvorrichtung (10) und einem Bänderrundwirker (12), wobei die Wickelvorrichtung (10) entlang des Produktionspfads (P) zwischen der Schneidvorrichtung (7) und dem Bänderrundwirker (12) angeordnet und zum Wickeln der Teigmasse (8) um eine Achse (11) konfiguriert ist, die vorzugsweise quer zu dem Produktionspfad (P) orientiert ist, und wobei der Verlauf des Produktionspfads (P) durch die Wickelvorrichtung (10) quer zum Verlauf des Produktionspfads (P) durch die Schneidvorrichtung (7) orientiert ist.

2. Teigverarbeitungsanlage nach Anspruch 1, wobei die Achse (11) quer zu einer Schnittrichtung (16) der Schneidvorrichtung (7) orientiert ist.

3. Teigverarbeitungsanlage nach einem der vorangehenden Ansprüche, wobei die Schneidvorrichtung (7) dazu konfiguriert ist, die Teigmasse (8) quer zu dem Produktionspfad (P) von dem Teigband (5) abzutrennen.

4. Teigverarbeitungsanlage nach einem der vorangehenden Ansprüche, wobei die Wickelvorrichtung (10) eine Wickelmatte () umfasst.

5. Teigverarbeitungsanlage nach einem der vorangehenden Ansprüche, wobei die Schneidvorrichtung (7) einen Schneidförderer (14) aufweist und die Wickelvorrichtung (10) einen Wickelförderer (15) aufweist, wobei der Schneidförderer (14) und der Wickelförderer (15) quer zueinander orientierte Förderrichtungen aufweisen und der Schneidförderer (14) dazu konfiguriert ist, die Teigmasse (8) auf den Wickelförderer (15) abzuwerfen.

6. Verfahren zum Rundwirken einer Teigmasse (8), umfassend:
Erzeugen eines Teigbands (5), das sich in Richtung eines Produktionspfads (P) erstreckt, aus einer ungeformten Teigmenge (17) durch einen Teigbanderzeuger (3);
Abtrennen einer Teigmasse (8) von dem Teigband (5) durch eine Schneidvorrichtung (7);
Wickeln der Teigmasse (8) um eine Achse (11), die vorzugsweise quer zu dem Produktionspfad (P) orientiert ist, durch eine Wickelvorrichtung (10);
Übergeben der Teigmasse (8) an einen Bänderrundwirker (12) nach dem Wickeln durch die Wickelvorrichtung (10); und
Rundwirken der Teigmasse (8) durch den Bänderrundwirker (12),
wobei der Verlauf des Produktionspfads (P) durch die Wickelvorrichtung (10) quer zum Verlauf des Produktionspfads (P) durch die Schneidvorrichtung (7) orientiert ist.

7. Verfahren nach Anspruch 6, wobei die Achse (11) quer zu einer Schnittrichtung (16) der Schneidvorrichtung (7) orientiert ist.

8. Verfahren nach einem der Ansprüche 6 oder 7, des Weiteren umfassend Abtrennen der Teigmasse (8) von dem Teigband (5) quer zu dem Produktionspfad (P) durch die Schneidvorrichtung (7).

9. Verfahren nach einem der Ansprüche 6-8, wobei die Wickelvorrichtung (10) eine Wickelmatte (13) umfasst.

10. Verfahren nach einem der Ansprüche 6-9, wobei die Teigmasse (8) in der Schneidvorrichtung (7) quer zu dem Produktionspfad (P) eine größere Ausdehnung aufweist als parallel zu dem Produktionspfad (P).

11. Verfahren nach einem der Ansprüche 6-10, wobei die Teigmasse (8) in der Wickelvorrichtung (10) quer zu dem Produktionspfad (P) eine kleinere Ausdehnung aufweist als parallel zu dem Produktionspfad (P).

12. Verfahren nach einem der Ansprüche 6-11, des Weiteren umfassend Abwerfen der Teigmasse (8) auf einen Wickelförderer (15) der Wickelvorrichtung (10) durch einen Schneidförderer (14) der Schneidvorrichtung (7), wobei der Schneidförderer (14) und der Wickelförderer (15) quer zueinander orientierte Förderrichtungen aufweisen.

## Claims

1. A dough processing plant (1), comprising:
a dough sheet forming device (3) configured to form a dough sheet (5) from an unshaped mass of dough (17) extending along the direction of a production path (P);
a cutting device (7) configured to form a body of dough (8) by severing from the dough sheet (5);
a dough processing device (9) including a wrapping device (10) and a sheet round moulder (12),
wherein the wrapping device (10) is arranged along the production path (P) between the cutting device (7) and the sheet round moulder (12) and configured for wrapping the body of dough (8) around an axis (11) preferably oriented transversely to the production path (P) and wherein the course of the production path (P) through the wrapping device (10) is oriented transversely to the course of the production path (P) through the cutting device (7).

2. The dough processing plant according to claim 1, wherein the axis (11) is oriented transversely to a cutting direction (16) of the cutting device (7).

3. The dough processing plant according to anyone of the preceding claims, wherein the cutting device (7) is configured to sever the body of dough (8) from the dough sheet (5) transversely to the production path (P).

4. The dough processing plant according to anyone of the preceding claims, wherein the wrapping device (10) comprises a wrapping mat (13).

5. The dough processing plant according to anyone of the preceding claims, wherein the cutting device (7) includes a cutting conveyor (14) and the wrapping device (10) includes a wrapping conveyor (15), wherein the cutting conveyor (14) and the wrapping conveyor (15) have conveying directions oriented transversely to each other and the cutting conveyor (14) is configured to drop the body of dough (8) onto the wrapping conveyor (15).

6. A method for round moulding a body of dough (8) comprising:
forming a dough sheet (5) extending along the direction of a production path (P) from an unshaped mass of dough (17) by means of a dough sheet forming device (3);
severing a body of dough (8) from the dough sheet (5) by means of a cutting device (7);
wrapping the body of dough (8) around an axis (11) preferably oriented transversely to the production path (P) by means of a wrapping device (10);
transferring the body of dough (8) to a sheet round moulder (12) after wrapping by the wrapping device (10); and
round moulding the body of dough (8) by means of the sheet round moulder (12),
wherein the course of the production path (P) through the wrapping device (10) is oriented transversely to the course of the production path (P) through the cutting device (7).

7. The method according to claim 6, wherein the axis (11) is oriented transversely to a cutting direction (16) of the cutting device (7).

8. The method according to claims 6 or 7, further comprising severing the body of dough (8) from the dough sheet (5) transversely to the production path (P) by means of the cutting device (7).

9. The method according to any one of claims 6 - 8, wherein the wrapping device (10) comprises a wrapping mat (13).

10. The method according to any one of claims 6 - 9, wherein the body of dough (8) in the cutting device (7) has a larger extension transverse to the production path (P) than parallel to the production path (P).

11. The method according to any one of claims 6 - 10, wherein the body of dough (8) in the wrapping device (10) has a smaller extension transverse to the production path (P) than parallel to the production path (P).

12. The method according to any one of claims 6 - 11, further comprising dropping the body of dough (8) onto a wrapping conveyor (15) of the wrapping device (10) by means of a cutting conveyor (14) of the cutting device (7), wherein the cutting conveyor (14) and the wrapping conveyor (15) have conveying directions oriented transversely to each other.

## Revendications

1. Installation de traitement de pâte (1), comprenant
un générateur de bande de pâte (3) configuré pour produire, à partir d'une quantité de pâte non mise en forme (17), une bande de pâte (5) qui s'étend dans la direction d'un trajet de production (P) ;
un dispositif de coupe (7) configuré pour produire une masse de pâte (8) en la séparant de la bande de pâte (5) ;
un dispositif de traitement de pâte (9) avec un dispositif d'enroulement (10) et un dispositif de torsion de bande (12), le dispositif d'enroulement (10) étant disposé le long du trajet de production (P) entre le dispositif de coupe (7) et le dispositif de torsion de bande (12) et étant configuré pour enrouler la masse de pâte (8) autour d'un axe (11), qui est de préférence orienté transversalement au trajet de production (P), et dans lequel le tracé du trajet de production (P) à travers le dispositif d'enroulement (10) est orienté transversalement au tracé du trajet de production (P) à travers le dispositif de coupe (7).

2. Installation de traitement de pâte selon la revendication 1, dans laquelle l'axe (11) est orienté transversalement à une direction de coupe (16) du dispositif de coupe (7).

3. Installation de traitement de pâte selon l'une quelconque des revendications précédentes, dans laquelle le dispositif de coupe (7) est configuré pour séparer la masse de pâte (8) de la bande de pâte (5) transversalement au trajet de production (P).

4. Installation de traitement de pâte selon l'une quelconque des revendications précédentes, dans laquelle le dispositif d'enroulement (10) comprend un tapis d'enroulement ().

5. Installation de traitement de pâte selon l'une quelconque des revendications précédentes, dans laquelle le dispositif de coupe (7) comprend un convoyeur de coupe (14) et le dispositif d'enroulement (10) comprend un convoyeur d'enroulement (15), le convoyeur de coupe (14) et le convoyeur d'enroulement (15) ayant des directions de transport orientées transversalement l'une par rapport à l'autre, et le convoyeur de coupe (14) étant configuré pour éjecter la masse de pâte (8) sur le convoyeur d'enroulement (15).

6. Procédé pour arrondir une masse de pâte (8), comprenant :
la production d'une bande de pâte (5) s'étendant dans la direction d'un trajet de production (P) à partir d'une quantité de pâte non mise en forme (17) par un générateur de bande de pâte (3) ;
la séparation d'une masse de pâte (8) de la bande de pâte (5) par un dispositif de coupe (7) ;
l'enroulement de la masse de pâte (8) autour d'un axe (11), de préférence orienté transversalement par rapport au trajet de production (P), par un dispositif d'enroulement (10) ;
le transfert de la masse de pâte (8) à un dispositif de torsion de bande (12) après l'enroulement par le dispositif d'enroulement (10) ; et
la mise en boule de la masse de pâte (8) par le dispositif de torsion de bande (12),
le tracé du trajet de production (P) à travers le dispositif d'enroulement (10) étant orienté transversalement au tracé du trajet de production (P) à travers le dispositif de coupe (7).

7. Procédé selon la revendication 6, dans lequel l'axe (11) est orienté transversalement à une direction de coupe (16) du dispositif de coupe (7).

8. Procédé selon l'une des revendications 6 ou 7, comprenant en outre la séparation de la masse de pâte (8) de la bande de pâte (5) transversalement au trajet de production (P) par le dispositif de coupe (7).

9. Procédé selon l'une quelconque des revendications 6 à 8, dans lequel le dispositif d'enroulement (10) comprend un tapis d'enroulement (13).

10. Procédé selon l'une quelconque des revendications 6 à 9, dans lequel la masse de pâte (8) présente dans le dispositif de coupe (7) une extension plus importante transversalement au trajet de production (P) que parallèlement au trajet de production (P).

11. Procédé selon l'une quelconque des revendications 6 à 10, dans lequel la masse de pâte (8) présente dans le dispositif d'enroulement (10) une extension plus faible transversalement au trajet de production (P) que parallèlement au trajet de production (P).

12. Procédé selon l'une quelconque des revendications 6 à 11, comprenant en outre l'éjection de la masse de pâte (8) sur un convoyeur d'enroulement (15) du dispositif d'enroulement (10) par un convoyeur de coupe (14) du dispositif de coupe (7), le convoyeur de coupe (14) et le convoyeur d'enroulement (15) ayant des directions de transport orientées transversalement l'une par rapport à l'autre.
